(19) 

**Europäisches Patentamt**
**European Patent Office**
**Office européen des brevets**

(11) **EP 4 654 314 A1**

(12) **EUROPEAN PATENT APPLICATION**
published in accordance with Art. 153(4) EPC

(43) Date of publication:
26.11.2025 Bulletin 2025/48

(21) Application number: 24764255.6

(22) Date of filing: 26.02.2024

(51) International Patent Classification (IPC):
*H01M 10/0562* (2010.01)    *H01M 10/052* (2010.01)
*C01B 25/14* (2006.01)

(52) Cooperative Patent Classification (CPC):
**C01B 25/14; H01M 10/052; H01M 10/0562**

(86) International application number:
**PCT/KR2024/095459**

(87) International publication number:
**WO 2024/181857 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 28.02.2023 KR 20230027096

(71) Applicant: **Enflow Co., Ltd.**
**Osan-si, Gyeonggi-do 18112 (KR)**

(72) Inventors:
• RYU, Kwang Hyun
  Goyang-si, Gyeonggi-do 10361 (KR)
• KIM, Hong Seok
  Seongnam-si, Gyeonggi-do 13629 (KR)
• CHOI, Jung Sik
  Suwon-si, Gyeonggi-do 16507 (KR)

(74) Representative: **Isarpatent**
**Patent- und Rechtsanwälte**
**Barth Hassa Peckmann & Partner mbB**
**Friedrichstraße 31**
**80801 München (DE)**

(54) **SULFIDE-BASED SOLID ELECTROLYTE AND ALL-SOLID-STATE BATTERY COMPRISING SAME**

(57) The present invention relates to a sulfide-based solid electrolyte and an all-solid-state battery including the same. According to one aspect of the present invention, the sulfide-based solid electrolyte includes at least one sulfide-based solid particle, and, in a scanning electron microscope (SEM) image of the at least one sulfide-based solid particle, a parameter value (C) defined by the following [Mathematical Formula 1] is 0.8 or greater.

[Mathematical Formula 1]

$$C = 4\pi A/P^2$$

wherein A is the area of a region defined along the outline of the at least one sulfide-based solid particle in the SEM image, and P means the length of the perimeter of the region.

FIG. 2

**Description**

[Technical Field]

The present invention relates to a sulfide-based solid electrolyte and an all-solid-state battery including the same, and more particularly to a sulfide-based solid electrolyte having excellent ion conductivity and an all-solid-state battery having high energy density.

[Background Art]

Recently, as the demand for electric vehicles increases, the demand for lithium ion batteries having high energy and high power density is also increasing. However, since the use of flammable liquid electrolytes poses a risk leading to stability problems such as fire, lithium ion batteries have limitations for use as next-generation electric vehicle batteries. In order to overcome these problems, research into solid electrolytes has been attracting attention. Since solid electrolytes not only have excellent stability but also can be laminated in a bipolar structure, energy density can be greatly improved compared to existing lithium ion batteries.

One of the key goals in the development of solid electrolytes is to implement high ionic conductivity at the level of liquid electrolytes even at room temperature. Among various inorganic solid electrolytes, sulfide-based solid electrolytes are the most promising because they have higher ionic conductivity than oxide-based solid electrolytes due to the large ionic radius and polarizability of $S^{2-}$ compared to $O^{2-}$.

In the case of an all-solid-state battery including a solid electrolyte, a cathode, an anode, and an electrolyte are all in a solid state, so that in order to maximize the energy density and ionic conductivity, each electrode is formed in a state where an active material and a solid electrolyte are mixed. However, due to the non-uniform particle size characteristics of sulfide-based solid electrolytes, it may be difficult to pack a solid electrolyte with an electrode active material in an electrode at a high density.

Sulfide-based solid electrolytes are prepared by either the solid-phase method using milling or the liquid-phase method in which the electrolyte is dissolved in an organic solvent and then precipitated, and technologies were introduced for preparing sulfide-based solid electrolytes with small particle diameters by controlling the milling time or controlling dissolution conditions and the like to refine the particle size of the sulfide-based solid electrolyte. However, sulfide-based solid electrolyte particles prepared by the above-described method have an irregular shape and a wide particle size distribution, so that there is a disadvantage in that it is difficult to control the shape and particle diameter of the particles. Meanwhile, when the solid electrolyte particles have an irregular shape and a large particle diameter, many micropores may be induced, and there is a problem in that ion conductivity decreases due to the induction of many micropores.

Therefore, there is need for developing a sulfide-based solid electrolyte capable of implementing excellent energy density by implementing high-density packing of a sulfide-based solid electrolyte and an electrode active material while minimizing a decrease in ionic conductivity of the sulfide-based solid electrolyte.

Meanwhile, the above-described background art is technical information that the inventors possessed for the purpose of deriving the present invention or that the inventors acquired in the process of deriving the present invention, and cannot necessarily be considered a publicly known technology that was disclosed to the general public prior to the filing of the application of the present invention.

[Disclosure]

[Technical Problem]

An object of an exemplary embodiment of the present invention is to provide a sulfide-based solid electrolyte with maximized ionic conductivity, and an all-solid-state battery including the same.

An object of another exemplary embodiment of the present invention is to provide a sulfide-based solid electrolyte having excellent energy density, and an all-solid-state battery including the same.

[Technical Solution]

As a technical means for achieving the above-described technical objects, according to one aspect of the present invention, the sulfide-based solid electrolyte includes at least one sulfide-based solid particle, and, in a scanning electron microscope (SEM) image of the at least one sulfide-based solid particle, a parameter value (C) defined by the following [Mathematical Formula 1] is 0.8 or greater.

[Mathematical Formula 1]

$$C = 4\pi A/P^2$$

wherein A is the area of a region defined along the outline of the at least one sulfide-based solid particle in the SEM image, and P means the length of the perimeter of the region.

According to another aspect of the present invention, the SEM image may be an image taken at 5,000x or greater magnification.

According to still another aspect of the present invention, a plurality of sulfide-based solid particles may be present in the SEM image, and the number of sulfide-based solid particles having the parameter value of 0.8 or greater may be 28% or greater of the total particles in the SEM image.

According to yet another aspect of the present invention, the sulfide-based solid particles may have an aspect ratio of 0.7 to 1.5.

According to yet another aspect of the present invention, the sulfide-based solid particles may have an average particle diameter of 70 $\mu$m or less.

According to yet another aspect of the present invention, the sulfide-based solid electrolyte may have an ionic conductivity of 3 mS/cm or greater.

According to yet another aspect of the present invention, the sulfide-based solid particles may include sulfur (S), lithium (Li) and phosphorus (P).

According to yet another aspect of the present invention, the sulfide-based solid particles may have an argyrodite crystal structure.

As a technical means for achieving the above-described technical objects, according to another aspect of the present invention, an all-solid-state battery includes a cathode, an anode corresponding to the cathode, and a sulfide-based solid electrolyte disposed between the cathode and the anode, the sulfide-based solid electrolyte including at least one sulfide-based solid particle, and in an SEM image of the sulfide-based solid particle, a parameter value (C) defined by the following [Mathematical Equation 1] of 0.8 or greater.

[Mathematical Formula 1]

$$C=4\pi A/P^2$$

wherein A is the area of a region defined along the outline in the SEM image of the sulfide-based solid particles, and P means the length of the perimeter of the region.

According to yet another aspect of the present invention, the SEM image may be an image taken at 5,000x or greater magnification.

According to yet another aspect of the present invention, the number of sulfide-based solid particles having a parameter value of 0.8 or greater present in the SEM image may be 28% or greater in the SEM image.

According to yet another aspect of the present invention, the sulfide-based solid particles may include sulfur (S), lithium (Li) and phosphorus (P).

According to yet another aspect of the present invention, the sulfide-based solid particles may have an argyrodite crystal structure.

[Advantageous Effects]

According to any one of the above-described means for solving the problems of the present invention, the sulfide-based solid electrolyte according to an exemplary embodiment of the present invention includes solid particles that satisfy specific parameters, and therefore can have excellent electrochemical characteristics.

In addition, according to any one of the means for solving the problems of the present invention, since the all-solid-state battery according to an exemplary embodiment of the present invention includes a sulfide-based solid electrolyte satisfying specific parameters, it is possible to pack the battery at a high energy density, thereby maximizing the battery capacity.

The technical effects which can be obtained from the present invention are not limited to the effects mentioned above, and other effects which have not been mentioned will be apparently understood by a person of ordinary skill in the art to which the present invention pertains from the following description.

[Description of Drawings]

FIG. 1 is a conceptual view illustrating the structure of an all-solid-state battery.

FIG. 2 is a cross-sectional view schematically illustrating a microstructure of the cathode of FIG. 1.

FIG. 3 is a graph for describing the changes in ionic conductivity and particle size of a sulfide-based solid electrolyte according to milling time.

FIG. 4 is a set of SEM images of sulfide-based solid electrolytes according to the examples of the present invention and a sulfide-based solid electrolyte according to a comparative example.

FIGS. 5A to 5D are SEM images of sulfide-based solid electrolytes according to the examples of the present invention and a sulfide solid electrolyte according to a comparative example, and images showing parameter values.

FIGS. 6A to 6D are graphs showing the results of measuring the battery capacity of pressurized cells using sulfide-based solid electrolytes according to the examples of the present invention and a sulfide solid electrolyte according to a comparative example.

[Best Mode]

Hereinafter, examples of the present invention will be described in detail such that a person skilled in the art to which the present invention pertains can easily carry out the present invention with reference to the accompanying drawings. However, the present invention may be implemented in various different forms, and is not limited to the exemplary embodiments described herein. In addition, in order to clearly describe the present invention, portions that are not related to the description are omitted in the drawings, and like reference numerals are added to like portions throughout the specification.

Throughout the specification, when one part is "connected" to another part, this includes not only a case where they are "directly connected to each other", but also a case where they are "indirectly connected to each other" with another member or device interposed therebetween. In addition, when one part "includes" one constituent element, unless otherwise specifically described, this does not mean that another constituent element is excluded, but means that another constituent element may be further included.

Hereinafter, the present invention will be described in detail with reference to accompanying drawings.

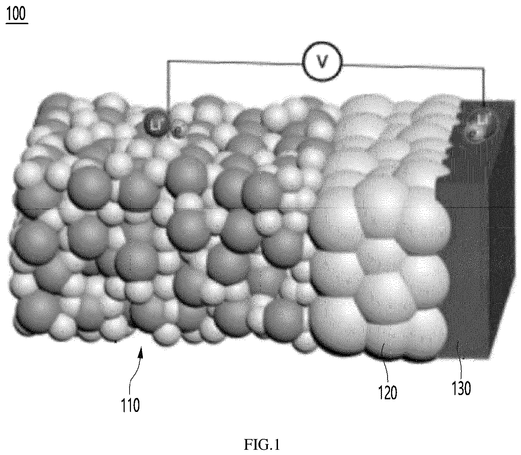

FIG. 1 is a conceptual view illustrating the structure of an all-solid-state battery.

Referring to FIG. 1, an all-solid-state battery 100 includes a cathode 110, an anode 130, and a solid electrolyte 120 interposed between the cathode 110 and the anode 130.

In the all-solid-state battery, the cathode 110, the solid electrolyte 120 and the anode 130 are all constructed in a solid state, and the battery may be configured to generate electricity based on the potential difference generated as metal ions of the cathode 110 pass through the solid electrolyte 110 and migrate to the anode 130.

The cathode 110 is composed of a positive electrode active material rich in metal ions, and the metal ions may be Group 1 or Group 2 metal ions in the Periodic Table. The positive electrode active material may be composed of a compound capable of intercalation/deintercalation of the Group 1 or 2 metal. When lithium (Li) ions are used as the metal ions, as the positive electrode active material, it is possible to use a compound represented by any one of the chemical formulae of $Li_aA_{1-b}B'_bD'_2$ (wherein, $0.90 \leq a \leq 1.8$ and $0 \leq b \leq 0.5$); $Li_aE_{1-b}B'_bO_{2-c}D'_c$ (wherein, $0.90 \leq a \leq 1.8$, $0 \leq b \leq 0.5$ and $0 \leq c \leq 0.05$); $LiE_{2-b}B'_bO_{4-c}D'_c$ (wherein, $0 \leq b \leq 0.5$ and $0 \leq c \leq 0.05$); $Li_aNi_{1-b-c}Co_bB'_cD'_a$ (wherein, $0.90 \leq a \leq 1.8$, $0 \leq b \leq 0.5$, $0 \leq c \leq 0.05$ and $0 < \alpha \leq 2$); $Li_aNi_{1-6-c}Co_bB'_cO_{2-\alpha}F'_\alpha$ (wherein, $0.90 \leq a \leq 1.8$, $0 \leq b \leq 0.5$, $0 \leq c \leq 0.05$ and $0 < \alpha < 2$); $Li_aNi_{1-b-c}Mn_bB'_cD'_\alpha$ (wherein, $0.90 \leq a \leq 1.8$, $0 \leq b \leq 0.5$, $0 \leq c \leq 0.05$ and $0 < \alpha \leq 2$); $Li_aNi_{1-6-c}Mn_bB'_cO_{2-\alpha}F'_\alpha$ (wherein, $0.90 \leq a \leq 1.8$, $0 \leq b \leq 0.5$, $0 \leq c \leq 0.05$ and $0 < \alpha < 2$); $Li_aNi_bE_cG_dO_2$ (wherein, $0.90 \leq a \leq 1.8$, $0 \leq b \leq 0.9$, $0 \leq c \leq 0.5$ and $0.001 \leq d \leq 0.1$.); $Li_aNi_bCo_cMn_dG_eO_2$ (wherein, $0.90 \leq a \leq 1.8$, $0 \leq b \leq 0.9$, $0 \leq c \leq 0.5$, $0 \leq d \leq 0.5$ and $0.001 \leq e \leq 0.1$.); $Li_aNiG_bO_2$ (wherein, $0.90 \leq a \leq 1.8$ and $0.001 \leq b \leq 0.1$.); $Li_aCoG_bO_2$ (wherein, $0.90 \leq a \leq 1.8$ and $0.001 \leq b \leq 0.1$.); $Li_aMnG_bO_2$ (wherein, $0.90 \leq a \leq 1.8$ and $0.001 \leq b \leq 0.1$.); $Li_aMn_2G_bO_4$ (wherein, $0.90 \leq a \leq 1.8$ and $0.001 \leq b \leq 0.1$.); $QO_2$; $QS_2$; $LiQS_2$; $V_2O_5$; $LiV_2O_5$; $LiI'O_2$; $LiNiVO_4$; $LI_{(3-f)}J_2(PO_4)_3$ $(0 \leq f \leq 2)$; $Li_{(3-f)}Fe_2(PO_4)_3$ $(0 \leq f \leq 2)$; and $LiFePO_4$.

In the above chemical formulae, A is nickel (Ni), cobalt (Co), manganese (Mn), or a combination thereof, B' is aluminum (Al), Ni, Co, Mn, chromium (Cr), iron (Fe), magnesium (Mg), strontium (Sr), vanadium (V), a rare earth element, or a combination thereof, D' is oxygen (O), fluorine (F), sulfur (S), phosphorus (P), or a combination thereof; E is Co Mn, or a combination thereof, F' is F, S, P, or a combination thereof, G is Al, Cr, Mn, Fe, Mg, lanthanum (La), cerium (Ce), Sr, V, or a combination thereof, Q is titanium (Ti), molybdenum (Mo), Mn, or a combination thereof, I' is Cr, V, Fe, scandium (Sc), yttrium (Y), or a combination thereof; and J is V, Cr, Mn, Co, Ni, copper (Cu), or a combination thereof.

The anode 130 is composed of a negative electrode active material, and may be composed of a layer in which the above-described metal ions (for example, Li ions) are not precipitated in a metallic form.

The negative electrode active material may include carbon (C), gold (Au), platinum (Pt), palladium (Pd), silicon (Si), silver (Ag), Al, bismuth (Bi), tin (Sn), zinc (Zn), Li, or a combination thereof.

Meanwhile, in order to maximize the conductivity of metal ions, the cathode 110 or the anode 130 may be configured in a form in which an active material and the solid electrolyte 120 are mixed. That is, as illustrated in FIG. 1, the cathode 110 is configured in a form in which a positive electrode active material and the solid electrolyte 120 are mixed, and the solid electrolyte 120 is configured to facilitate the migration of metal ions generated from the positive electrode active material.

The solid electrolyte 120 may be composed of various materials such as sulfide-based, oxide-based, and polymer-based materials, and may be preferably composed of a sulfide-based material. Hereinafter, description will be made focused on the sulfide-based solid electrolyte 120.

The sulfide-based solid electrolyte 120 of the present invention is a solid-state electrolyte including sulfide-based solid particles, and has a technical feature in which the particle shape and particle size satisfy specific conditions.

The sulfide-based solid particles include S atoms, include a metal belonging to Group 1 or Group 2 of the Periodic Table, and have Group 1 or Group 2 metal ion conductivity. The sulfide-based solid particles include, for example, Li, S, and P, and may have Li ion conductivity.

Examples of the sulfide-based solid particles include $Li_2S-P_2S_5$, $Li_2S-P_2S_5-LiCl$, $Li_2S-P_2S_5-H_2S$, $Li_2S-P_2S_5-H_2S-LiCl$, $Li_2S-LiI-P_2S_5$, $Li_2S-LiI-Li_2O-P_2S_5$, $Li_2S-LiBr-P_2S_5$, $Li_2S-Li_2OP_2S_5$, $Li_2S-Li_3PO_4-P_2S_5$, $Li_2S-P_2S_5-P_2O_5$, $Li_2S-P_2S_5-SiS_2$, $Li_2S-P_2S_5-SiS_2-LiCl$, $Li_2S-P_2S_5-SnS$, $Li_2S-P_2S_5-Al_2S_3$, $Li_2S-GeS_2$, $Li_2S-GeS_2-ZnS$, $Li_2S-Ga_2S_3$, $Li_2S-GeS_2-Ga_2S_3$, $Li_2S-GeS_2-P_2S_5$, $Li_2S-GeS_2-Sb_2S_5$, $Li_2S-GeS_2-Al_2S_3$, $Li_2S-SiS_2$, $Li_2S-Al_2S_3$, $Li_2S-SiS_2-Al_2S_3$, $Li_2S-SiS_2-P_2S_5$, $Li_2S-SiS_2-P_2S_5-LiI$, $Li_2S-SiS_2-LiI$, $Li_2S-SiS_2-Li_4SiO_4$, $Li_2S-SiS_2-Li_3PO_4$, $Li_{10}GeP_2S_{12}$ and the like. However, the types of the sulfide-based solid particles of the present invention are not limited to the above-described examples.

The above-described sulfide-based solid particles have a crystalline nature and may have, for example, an argyrodite crystal structure.

The sulfide-based solid particles have an average particle diameter of 70 $\mu$m or less.

In addition, the sulfide-based solid electrolyte 120 of the present invention may include at least one sulfide-based solid particle having a parameter value (C) of 0.8 or greater defined by the following [Mathematical Formula 1] in an image taken by a scanning electron microscope (SEM).

[Mathematical Formula 1]

$$C=4\pi A/P^2$$

wherein A means the area of the region defined along the outline of the sulfide-based solid particle in the SEM image (that is, the area of the sulfide-based solid particle), and P means the length of the perimeter of the region defined along the outline of the sulfide-based solid particle in the SEM image (that is, the length of the perimeter of the sulfide-based solid particle).

The $4\pi A/P^2$ value in the [Mathematical Formula 1] means a parameter that quantitatively indicates how close a shape defined on a two-dimensional plane is to a circle, and for convenience of description in the present specification, this is defined as the "parameter." The closer the parameter is to 1, the closer the shape defined on the two-dimensional plane is to a circle.

Meanwhile, the SEM image may refer to an image taken at 5,000x or greater magnification.

A plurality of sulfide-based solid particles may be included in an image of the sulfide-based solid electrolyte 120 taken through a SEM at 5,000x or greater magnification, and a plurality of sulfide-based solid particles having a parameter value of 0.8 or greater may be present. For example, the sulfide-based solid particles having a parameter value of 0.8 or greater may account for 28% or greater of the total particles, preferably 34% or greater, and more preferably 50% or greater.

In some exemplary embodiments, the sulfide-based solid electrolyte 120 of the present invention may include at least one particle having a parameter value of 0.7 or greater in an SEM image.

Preferably, in the SEM image of the sulfide-based solid electrolyte 120 at 5,000x or greater magnification, particles having a parameter value of 0.7 or greater may account for 61% or greater of the total particles, preferably 63% or greater, and more preferably 79% or greater.

Meanwhile, the sulfide-based solid particles may have an aspect ratio of 0.7 to 1.5. Here, the aspect ratio refers to the aspect ratio of a sulfide-based solid particle on an SEM image at 5,000x or greater magnification.

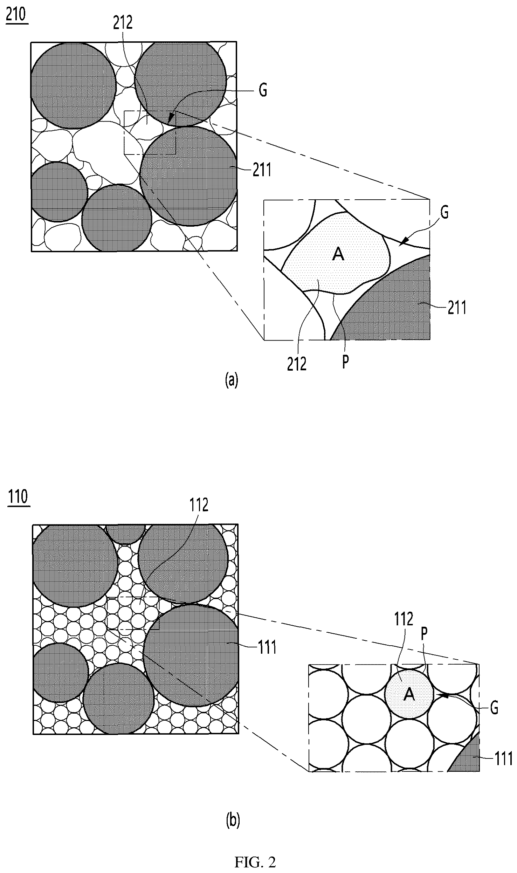

For a more detailed description of the above-described characteristics of the sulfide-based solid particles of the present invention, reference is also made to FIG. 2.

FIG. 2 is a cross-sectional view schematically illustrating a microstructure of the cathode of FIG. 1.

Specifically, FIG. 2A is a view illustrating an example of an SEM image of a cathode 210 composed of a mixture of a sulfide-based solid electrolyte in the related art and a positive electrode active material, and FIG. 2B is a view illustrating an SEM image of a cathode 110 composed of a mixture of a sulfide-based solid electrolyte according to an exemplary embodiment of the present invention and a positive electrode active material.

Referring to FIG. 2A, the sulfide-based solid electrolyte in the related art includes sulfide-based solid particles 212 having a parameter value of less than 0.8. In other words, sulfide-based solid electrolytes in the related art have no or relatively few sulfide-based solid particles having a parameter value of 0.8 to 1.

The sulfide-based solid particles 212 in the related have the parameter value of less than 0.8, and thus, have an uneven and rough morphology in a two-dimensional SEM image, as illustrated in FIG. 2A.

In addition, the sulfide-based solid particles 212 in the related art have an aspect ratio of more than 1.5 or less than 0.7. Thus, a shape defined along the outline of a sulfide-based solid particle 212 in the related art in the SEM image generally has a non-uniform aspect ratio, and thus, has an elongated shape.

In addition, the average particle diameter of the sulfide-based solid particles 212 in the related art exceeds 70 $\mu$m. The sulfide-based solid particles 212 in the related art are present in a form in which large and small particles are non-uniformly mixed, and the average value of the particle diameters of the total particles exceeds 70 $\mu$m.

In some exemplary embodiments, among the sulfide-based solid particles 212 in the related art, particles having a parameter value of 0.8 or greater may be present. However, a substantial number of sulfide-based solid particles 212 in the cathode 210 may have a parameter value of less than 0.8. Specifically, the ratio of particles having a parameter value of less than 0.8 to the total particles present in the SEM image may be 72% or greater. In contrast, the ratio of the sulfide-based solid particles (212) having a parameter value of 0.8 to 1 is less than 28%.

The sulfide-based solid particles 212 in the related art have a large average particle diameter and a large aspect ratio, and the ratio of particles having a parameter value of less than 0.8 is 72% or greater. That is, most particles have a parameter of less than 0.8. Thus, large pores G1 may be present between the sulfide-based solid particles 212 in the cathode 210, and the contact area between the sulfide-based solid particles 212 in the related art and the positive electrode active material 211 may be small.

In contrast, referring to FIG. 2B, the sulfide-based solid electrolyte of the present invention includes sulfide-based solid particles 112 having a parameter value of 0.7 or greater. Preferably, the sulfide-based solid electrolyte of the present invention includes sulfide-based solid particles 112 having a parameter value of 0.8 to 1.

Since the particles having a parameter value of 0.8 to 1 have a $4\pi A/P^2$ value close to 1, their shape may be close to a circle in a two-dimensional SEM image. Thus, in the cathode 110 including the sulfide-based solid electrolyte of the present invention, the sulfide-based solid particles 112 have a shape similar to a circle, as illustrated in FIG. 2B.

In addition, the sulfide-based solid particles 112 of the present invention have an aspect ratio of 0.7 to 1.5. Thus, a shape defined along the outline of the sulfide-based solid particle 112 of the present invention in the SEM image generally has an aspect ratio close to 1, and thus, has a shape similar to a circle.

The sulfide-based solid particles 112 of the present invention have an average particle diameter of 70 $\mu$m or less. Thus, most of the sulfide-based solid particles 112 may be present in a densely packed manner as fine nanoparticles in the SEM image.

Some particles among the sulfide-based solid particles 112 of the present invention may have the parameter value of less than 0.8. However, as described above, most of the sulfide-based solid particles 112 of the present invention have a parameter value of 0.8 to 1. For example, in the SEM image, particles having a parameter value of 0.8 to 1 may account for at least 28% of the total particles, and particles having a parameter value of 0.7 to 1 may account for at least 61% of the total particles.

As described above, the sulfide-based solid electrolyte of the present invention is characterized as having a small and uniform average particle diameter of 70 $\mu$m or less, as well as the parameter value being 0.8 to 1 and the aspect ratio being 0.7 to 1.5. In particular, particles having the parameter values of 0.8 to 1 are characterized as accounting for at least 28% of the total particles present in an SEM image measured at 5,000x or greater magnification.

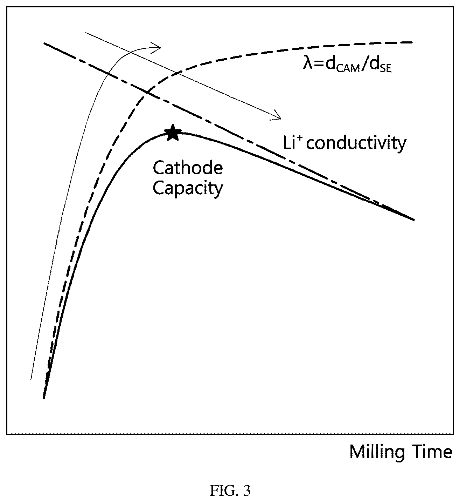

The inventors of the present invention have discovered that when the morphological characteristics of the sulfide-based solid electrolyte have the above-described features, excellent Li ion conductivity can be implemented in a cathode 110 consisting of a mixture of the sulfide-based solid electrolyte and the positive electrode active material 111, and the sulfide-based solid particles 112 and the positive electrode active material 111 can be packed at a high density. For a more detailed description of this, reference is also made to FIG. 3.

FIG. 3 is a graph for describing the changes in ionic conductivity and particle size of a sulfide-based solid electrolyte according to milling time.

Sulfide-based solid electrolytes in the related art are prepared by a method of mixing electrolyte raw materials using an attrition mill or a ball mill or the like, and then sintering the mixture through high-temperature heat treatment.

From the viewpoint of energy density, since as much solid electrolyte as possible needs to be packed into a limited volume, the average particle diameter of the sulfide-based solid particles needs to be reduced by increasing the milling time.

As illustrated in FIG. 3, as the milling time increases, the average particle diameter ($d_{SE}$) of the sulfide-based solid particles decreases, and thus the ratio ($\lambda$) of the average particle diameter ($d_{SE}$) of the sulfide-based solid particles to the average particle diameter ($d_{CAM}$) of the positive electrode active material may increase.

However, as the milling time increases so that the average particle diameter ($d_{SE}$) of the sulfide-based solid particles decreases, Li ion conductivity tends to decrease.

Thus, more sulfide-based solid electrolyte in the cathode may be packed by reducing the average particle diameter ($d_{SE}$) of the sulfide solid particles according to the milling time, but since the ionic conductivity decreases, the capacity of the cathode has a certain critical value, as illustrated in FIG. 3.

The inventors of the present invention have discovered that it is not enough to simply reduce the average particle diameter of the sulfide-based solid electrolyte to increase the capacity of the cathode, and that the particle morphology of the sulfide-based solid electrolyte also needs to be controlled. The inventors of the present invention have discovered that as a specific parameter of two-dimensional sulfide-based solid particles present in an SEM image of a sulfide-based solid electrolyte is close to 1, the battery capacity can be increased by enabling high-density packing of the positive electrode active material and the sulfide-based solid electrolyte in the cathode without inhibiting Li ion conductivity.

That is, when the average particle diameter of the sulfide-based solid electrolyte is controlled to 70 $\mu$m or less and the sulfide-based solid electrolyte is photographed by an SEM at 5,000x or greater magnification, if the ratio of particles having a $4\pi A/P^2$ value of 0.8 or more (that is, 0.8 to 1) of the sulfide-based solid particles in the obtained SEM image is at least 28% or greater, the inhibition of Li ion conductivity may be minimized, and the battery capacity may be maximized by enabling high-density packing of the positive electrode active material and the sulfide-based solid electrolyte.

This is believed to be because, as $4\pi A/P^2$ value is 0.8 or greater, the shape of the sulfide-based solid particles is close to an ideal sphere, and as the sulfide-based solid electrolyte has an average particle diameter of 70 $\mu$m or less, the size of the sulfide-based solid particles becomes smaller, thereby enabling high-density packing while maintaining a sufficient contact area between the sulfide-based solid particles and the positive electrode active material.

The sulfide-based solid electrolyte of the present invention may have an ionic conductivity of 3 mS/cm or greater.

Therefore, the sulfide-based solid electrolyte of the present invention has an advantage in that it is possible to have excellent electrochemical characteristics and to secure excellent charge capacity even at repeated charge-discharge cycles.

The sulfide-based solid electrolyte of the present invention may be prepared by the following method.

First, droplets are generated from a precursor solution including a sulfide-based solid electrolyte precursor and sprayed into a reactor, heat is applied to the sprayed droplets to generate sulfide-based solid particles, and the generated sulfide-based solid particles are captured to obtain a sulfide-based solid electrolyte, thereby preparing the sulfide-based solid electrolyte of the present invention.

In this case, the sulfide-based solid electrolyte precursor may include lithium sulfide and a halogen compound.

The lithium sulfide may include one or more materials selected from the group consisting of $Li_2S$, $Li_2S_2$, $Li_2S_4$ and $Li_2S_6$.

The halogen compound may include one or more materials selected from the group consisting of lithium bromide (LiBr), lithium chloride (LiCl), lithium iodide (LiI) and lithium fluoride (LiF).

The sulfide-based solid electrolyte precursor may further include a metal compound, and the metal compound may include one or more materials selected from the group consisting of Al, Si, P, gallium (Ga), iodine (I), Sn, germanium (Ge), antimony (Sb), Zn, arsenic (As), tungsten (W), Se, V and calcium (Ca).

The spraying of the precursor solution may be performed by various methods, and may be performed, for example, by a method of generating droplets of the precursor solution by an ultrasonic transducer.

The method of applying heat to the precursor droplets may be selected from various methods, and may be performed by a method of applying heat to a reactor to apply heat to a reaction space where droplets are sprayed.

The capturing of the sulfide-based solid electrolyte may be performed by various methods capable of capturing fine nanoparticles, and is not particularly limited.

Since the sulfide-based solid electrolyte according to an exemplary embodiment of the present invention is produced by spraying a precursor solution, heat-treating the precursor solution, and obtaining a powder as described above, the sulfide-based solid electrolyte may be prepared by a simplified method, and since the method includes simple processes, the method has advantages of easily constructing a mass production facility and being suitable for mass production.

[Mode for the Invention]

Hereinafter, the excellent electrochemical characteristics of the sulfide-based solid electrolyte of the present invention will be described through experimental examples.

<Preparation Example 1, Preparation of sulfide-based solid electrolyte>

First, raw materials $Li_2S$, $P_2S_5$ and LiCl were mixed in a glove box in an inert gas atmosphere to prepare a mixed powder, and the mixed powder was dissolved in a mixed solvent of ethyl acetate and ethanol to prepare a precursor solution.

The precursor solution thus prepared was ultrasonically atomized to produce droplets, and the droplets were introduced into a heated reactor using an inert carrier gas. The carrier gas was supplied at a flow rate of 10 L/min to obtain a first powder.

The obtained powder was put into an aluminum crucible, and heat-treated at 550°C for 4 hours while flowing an inert gas, and then cooled to room temperature to prepare the sulfide-based solid electrolyte of Example 1.

Droplets were prepared using the same precursor as in the above-described method, the precursor was introduced into a reactor by supplying an inert carrier gas at a flow rate of 5 L/min to obtain a second powder, and the sulfide-based solid electrolyte of Example 2 was prepared by performing the same heat treatment as in the above-described method.

Droplets were prepared using the same precursor as in the above-described method, the precursor was introduced into a reactor by supplying an inert carrier gas at a flow rate of 15 L/min to obtain a second powder, and the sulfide-based solid electrolyte of Example 3 was prepared by performing the same heat treatment as in the above-described method.

The chemical formula of the sulfide-based solid electrolytes of Examples 1 to 3 was $Li_6PS_5Cl$.

Meanwhile, as a comparative example, a $Li_6PS_5Cl$ solid electrolyte was obtained and filtered through a 325 mesh to prepare a sulfide-based solid electrolyte having an average particle diameter (D50) of 10 $\mu$m or less as the sulfide-based solid electrolyte of Comparative Example 1.

<Experimental Example 1, SEM photography>

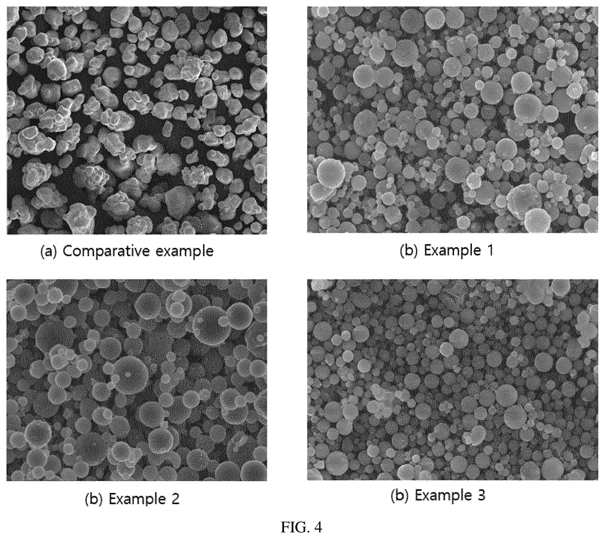

In order to compare the particles of the solid electrolyte according to the comparative example and the solid electrolytes according to Examples 1 to 3, the particles were photographed using a scanning electron microscope (SEM). SEM images of each sample were taken at 5,000x magnification. The results are shown in FIG. 4.

FIG. 4 is a set of SEM images of sulfide-based solid electrolytes according to the examples of the present invention and a sulfide-based solid electrolyte according to a comparative example.

Referring to FIG. 4, it can be confirmed that the sulfide-based solid electrolytes of Examples 1 to 3 have round particle shapes compared to the solid electrolyte of the comparative example. That is, the average particle diameter of the sulfide-based solid electrolyte of the comparative example is considered to be at a level similar to that of Example 1, but it can be confirmed that the particle shape is uneven and the aspect ratio is not constant.

Meanwhile, it can be confirmed that the sulfide-based solid electrolyte of Example 3 has a very small particle diameter, and most of the particle shapes are also round.

<Experimental Example 2, Comparison of particle parameters>

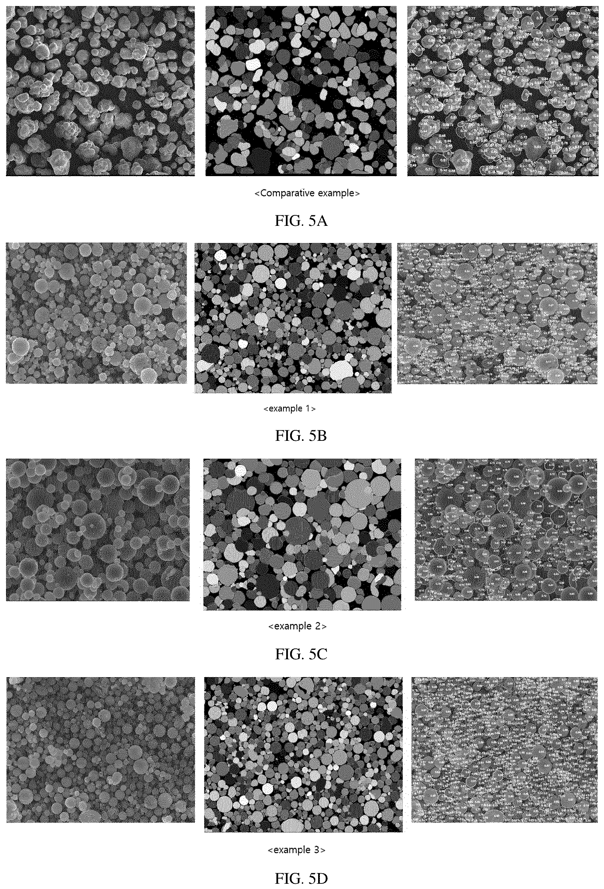

The SEM images were analyzed to calculate the parameter value ($4\pi A/P^2$) of each particle. The results are as shown in FIGS. 5A to 5D.

FIGS. 5A to 5D are SEM images of sulfide-based solid electrolytes according to the examples of the present invention and a sulfide solid electrolyte according to a comparative example, and images showing parameter values.

The parameter values of each particle were calculated by digitally analyzing the SEM image of each sample to generate a normalized image for regions defined along the outlines of the sulfide solid particles, and then calculating the parameter values based on the area A value and the perimeter P value for the normalized image.

Referring to FIG. 5A, it can be seen that the parameter values of most of the particles in the sulfide-based solid electrolyte of the comparative example are less than 0.8. The parameter values and cumulative numbers of particles in the SEM image of the comparative example are as shown in the following Table 1.

[Table 1]

| Classification | Parameter range | Number | Cumulative number | Cumulative ratio (%) |
|---|---|---|---|---|
| Comparative Example | 0.9 to 1.0 | - | - | 0 |
| | 0.8 to 0.9 | 99 | 99 | 27.7 |
| | 0.7 to 0.8 | 119 | 218 | 60.9 |
| | 0.6 to 0.7 | 89 | 307 | 85.8 |
| | 0.5 to 0.6 | 30 | 337 | 94.1 |
| | 0.4 to 0.5 | 16 | 353 | 98.6 |
| | 0.3 to 0.4 | 3 | 356 | 99.4 |

(continued)

| Classification | Parameter range | Number | Cumulative number | Cumulative ratio (%) |
|---|---|---|---|---|
| | 0.2 to 0.3 | 2 | 358 | 100 |
| | 0.1 to 0.2 | - | - | - |
| | 0 to 0.1 | - | - | - |

As shown in [Table 1] above, it can be confirmed that the sulfide-based solid electrolyte of the comparative example is composed of solid particles having a parameter value of less than 0.8. That is, the cumulative ratio of solid particles having a parameter value of less than 0.8 was 72.3%, and the proportion of solid particles a parameter value of 0.8 to 1 was only at a level of 27.7%.

Referring to FIGS. 5B to 5D, it can be confirmed that in the sulfide-based solid particles of Examples 1 to 3, most of the solid particles have the parameter value of 0.7 or greater, and it can be seen that the proportion of particles having a parameter value of 0.8 or greater is also considerably high. The parameter values and cumulative numbers of particles in the SEM images of Examples 1 to 3 are as shown in the following Table 2.

[Table 2]

| Classification | Parameter range | Number | Cumulative number | Cumulative ratio (%) |
|---|---|---|---|---|
| Example 1 | 0.9 to 1.0 | 6 | 6 | 0.8 |
| | 0.8 to 0.9 | 349 | 355 | 50.0 |
| | 0.7 to 0.8 | 206 | 561 | 79.0 |
| | 0.6 to 0.7 | 80 | 641 | 90.3 |
| | 0.5 to 0.6 | 41 | 682 | 96.1 |
| | 0.4 to 0.5 | 19 | 701 | 98.7 |
| | 0.3 to 0.4 | 7 | 708 | 99.7 |
| | 0.2 to 0.3 | 2 | 710 | 100 |
| | 0.1 to 0.2 | - | - | - |
| | 0 to 0.1 | - | - | - |
| Example 2 | 0.9 to 1.0 | 1 | 1 | 0.3 |
| | 0.8 to 0.9 | 115 | 116 | 34.2 |
| | 0.7 to 0.8 | 100 | 216 | 63.7 |
| | 0.6 to 0.7 | 66 | 282 | 83.2 |
| | 0.5 to 0.6 | 43 | 325 | 95.9 |
| | 0.4 to 0.5 | 10 | 335 | 98.8 |
| | 0.3 to 0.4 | 4 | 339 | 100.0 |
| | 0.2 to 0.3 | - | - | - |
| | 0.1 to 0.2 | - | - | - |
| | 0 to 0.1 | - | - | - |
| Example 3 | 0.9 to 1.0 | 5 | 5 | 0.6 |
| | 0.8 to 0.9 | 201 | 506 | 57.5 |
| | 0.7 to 0.8 | 218 | 724 | 82.3 |
| | 0.6 to 0.7 | 86 | 810 | 92.0 |
| | 0.5 to 0.6 | 51 | 861 | 97.8 |
| | 0.4 to 0.5 | 16 | 877 | 99.7 |
| | 0.3 to 0.4 | 3 | 880 | 100.0 |

(continued)

| Classification | Parameter range | Number | Cumulative number | Cumulative ratio (%) |
|---|---|---|---|---|
| | 0.2 to 0.3 | - | - | - |
| | 0.1 to 0.2 | - | - | - |
| | 0 to 0.1 | - | - | - |

[Mathematical Formula 2]

$$\sigma = t / (a*R)$$

wherein $\sigma$ represents ionic conductivity, t represents the thickness of the pellet, R represents the bulk resistance, and a represents the area of the pellet.

The evaluation results are shown in the following [Table 3].

[Table 3]

| Classification | Ionic conductivity (mS/cm) |
|---|---|
| Comparative Example | 3.62 |
| Example 1 | 3.68 |
| Example 2 | 3.65 |
| Example 3 | 3.85 |

As shown in [Table 3] above, it can be seen that the sulfide-based solid electrolyte of the present invention has ion conductivity equivalent to or better than that of the sulfide-based solid electrolyte of the comparative example.

<Preparation Example 2, Manufacture of all-solid-state battery>

In order to evaluate the excellent electrochemical characteristics of the sulfide-based solid electrolyte of the present invention, pressurized cells were manufactured using the sulfide-based solid electrolytes of the comparative example and Examples 1 to 3 described above.
Specifically, a positive electrode active material NCM811 was mixed at 75, 80, and 85 wt% to manufacture three types of all-solid-state pressurized cells for each sample. Meanwhile, a Li metal electrode was used as an anode.

<Experimental Example 4, Measurement of battery capacity>

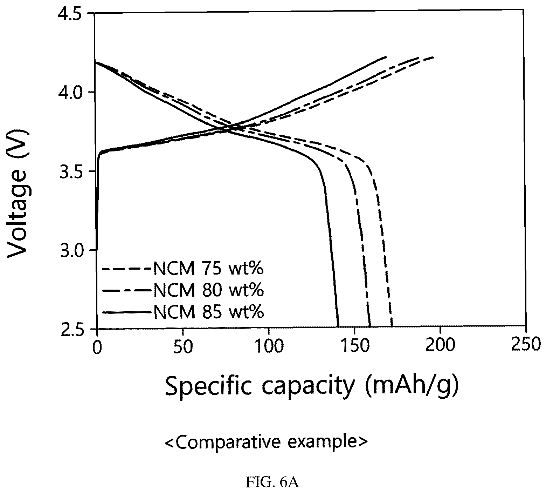

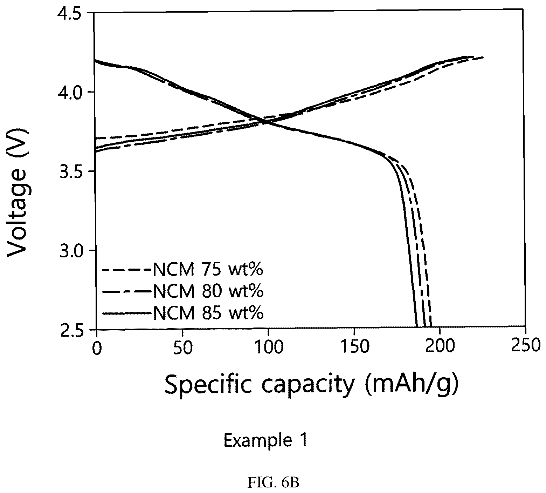

The battery capacities of the pressurized cells manufactured in Preparation Example 2 were measured at room temperature. The results are as shown in FIGS. 6A to 6D.
FIGS. 6A to 6D are graphs showing the results of measuring the battery capacity of pressurized cells using sulfide-based solid electrolytes according to the examples of the present invention and a sulfide solid electrolyte according to a comparative example.
Specifically, FIG. 6A is a graph showing the battery capacity measurement of a pressurized cell using the sulfide-based solid electrolyte of the comparative example, and FIGS. 6B to 6D are graphs showing the battery capacity measurement of pressurized cells using the sulfide-based solid electrolytes of Examples 1 to 3, respectively.
In addition, the battery capacity measurement results of FIGS. 6A to 6D are as shown in the following [Table 4].

[Table 4]

| Classification | NCM 75wt% | NCM 80wt% | NCM 85wt% |
|---|---|---|---|
| Comparative Example 1 | 176.3 | 163.1 | 144.1 |
| Example 1 | 198.7 | 195.4 | 190.6 |
| Example 2 | 187.7 | 174.3 | 165.0 |

(continued)

| Classification | NCM 75wt% | NCM 80wt% | NCM 85wt% |
|---|---|---|---|
| Example 3 | 199.4 | 194.2 | 191.6 |

Referring to [Table 4] and FIGS. 6A to 6D, it can be seen that as the content of the positive electrode active material NCM811 decreases, the amount of the sulfide-based solid electrolyte increases relatively, and thus the battery capacity increases within the cell having the same volume.

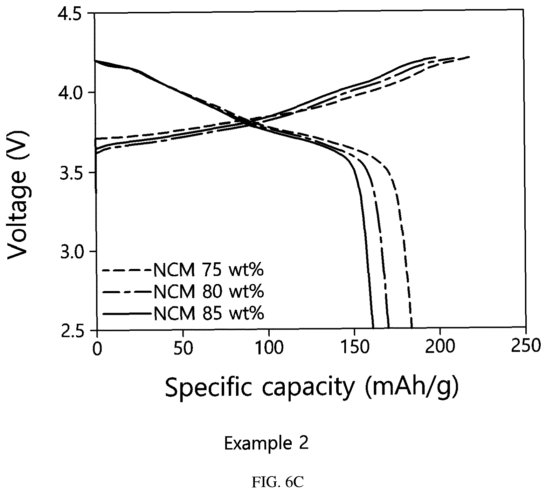

Meanwhile, since the sulfide-based solid electrolyte of the comparative example and the sulfide-based solid electrolyte of Example 2 have a similar particle number of about 350 particles on an SEM image at 5,000x magnification, the average particle size of the two samples may be considered to be similar, but the sulfide-based solid electrolyte of Example 2 includes more solid particles having the parameter value of 0.8 to 1 than the sulfide-based solid electrolyte of the comparative example (see Experimental Example 2 above). Therefore, as can be seen by comparing FIG. 6A with FIG. 6C, it can be seen that the sulfide-based solid electrolyte of Example 2 can provide better battery capacity than the sulfide-based solid electrolyte of the comparative example. This is believed to be because the solid particles of Example 2 are mostly circular, which maximizes the contact area with the positive electrode active material, thereby minimizing the decrease in Li ion conductivity.

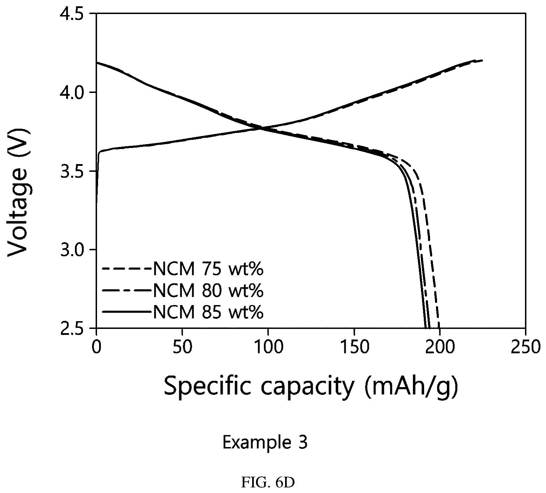

In addition, as can be seen in FIGS. 6B and 6D, it can be seen that when the average particle diameter of the sulfide-based solid electrolyte is sufficiently small and the cumulative ratio of particles having a parameter value of 0.8 to 1 is 50% or greater in an SEM image at 5,000x or greater magnification, the battery capacity can be improved by about 10% or greater compared to the sulfide-based solid electrolyte of the comparative example, and through this, it can be seen that the higher the proportion of solid particles having a parameter value of 0.8 to 1, the more improved the electrochemical characteristics of the sulfide-based solid electrolyte.

The above-described description of the present invention is provided for illustrative purposes, and those skilled in the art to which the present invention pertains will understand that the present invention can be easily modified into other specific forms without changing the technical spirit or essential features of the present invention. Therefore, it should be understood that the above-described embodiments are only exemplary in all aspects and are not restrictive. For example, each constituent element which is described as a singular form may be implemented in a distributed form, and similarly, constituent elements which are described as being distributed may be implemented in a combined form.

The scope of the present invention is represented by the claims to be described below rather than the detailed description, and it should be interpreted that the meaning and scope of the claims and all the changes or modified forms derived from the equivalent concepts thereto fall within the scope of the present invention.

[Industrial Applicability]

The present invention can be applied to the secondary battery industry. The present invention can be applied to the secondary battery industry of, for example, secondary batteries for electric vehicles, secondary batteries for electronic devices such as notebook-sized computers, tablet PCs, and smartphones, and equipment that operates based on a battery energy source.

**Claims**

1. A sulfide-based solid electrolyte comprising at least one sulfide-based solid particle, and, in a scanning electron microscope (SEM) image of the at least one sulfide-based solid particle, having a parameter value (C) defined by the following [Mathematical Formula 1] of 0.8 or greater:

[Mathematical Formula 1]

$$C=4\pi A/P^2$$

wherein A is the area of a region defined along the outline of the at least one sulfide-based solid particle in the SEM image, and
P means the length of the perimeter of the region.

2. The sulfide-based solid electrolyte of claim 1, wherein the SEM image is an image taken at 5,000x or greater magnification.

3. The sulfide-based solid electrolyte of claim 2, wherein a plurality of sulfide-based solid particles are present in the SEM image, and the number of sulfide-based solid particles having the parameter value of 0.8 or greater is 28% or greater of the total particles in the SEM image.

4. The sulfide-based solid electrolyte of claim 1, wherein the sulfide-based solid particles have an aspect ratio of 0.7 to 1.5.

5. The sulfide-based solid electrolyte of claim 1, wherein the sulfide-based solid particles have an average particle diameter of 70 μm or less.

6. The sulfide-based solid electrolyte of claim 1, wherein the sulfide-based solid electrolyte has an ionic conductivity of 3 mS/cm or greater.

7. The sulfide-based solid electrolyte of claim 1, wherein the sulfide-based solid particles comprise sulfur (S), lithium (L) and phosphorus (P).

8. The sulfide-based solid electrolyte of claim 1, wherein the sulfide-based solid particles have an argyrodite crystal structure.

9. An all-solid-state battery comprising a cathode;

an anode corresponding to the cathode; and
a sulfide-based solid electrolyte disposed between the cathode and the anode, wherein the sulfide-based solid electrolyte comprises
at least one sulfide-based solid particle,
wherein in an SEM image of the sulfide-based solid particle, a parameter value (C) defined by the following [Mathematical Formula 1] is 0.8 or greater:

[Mathematical Formula 1]

$$C = 4\pi A/P^2$$

wherein A is the area of a region defined along the outline in the SEM image of the sulfide-based solid particles, and
P means the length of the perimeter of the region.

10. The all-solid-state battery of claim 9, wherein the SEM image is an image taken at 5,000x or greater magnification.

11. The all-solid-state battery of claim 10, wherein the number of sulfide-based solid particles having a parameter value of 0.8 or greater present in the SEM image is 28% or greater in the SEM image.

12. The all-solid-state battery of claim 9, wherein the sulfide-based solid particles comprise sulfur (S), lithium (L) and phosphorus (P).

13. The all-solid-state battery of claim 9, wherein the sulfide-based solid particles have an argyrodite crystal structure.

FIG.1

210

212

G

211

G

A

211

212    P

(a)

110

112

112    P

111

A

G

111

(b)

FIG. 2

$\lambda = d_{CAM}/d_{SE}$

Li$^+$ conductivity

Cathode Capacity

Milling Time

FIG. 3

(a) Comparative example

(b) Example 1

(b) Example 2

(b) Example 3

FIG. 4

<Comparative example>

FIG. 5A

<example 1>

FIG. 5B

<example 2>

FIG. 5C

<example 3>

FIG. 5D

<Comparative example>

FIG. 6A

Example 1

FIG. 6B

Example 2

FIG. 6C

Example 3

FIG. 6D

## INTERNATIONAL SEARCH REPORT

| International application No. |
| --- |
| **PCT/KR2024/095459** |

| A. | CLASSIFICATION OF SUBJECT MATTER |
| --- | --- |

**H01M 10/0562**(2010.01)i; **H01M 10/052**(2010.01)i; **C01B 25/14**(2006.01)i

According to International Patent Classification (IPC) or to both national classification and IPC

| B. | FIELDS SEARCHED |
| --- | --- |

Minimum documentation searched (classification system followed by classification symbols)

H01M 10/0562(2010.01); C01B 17/22(2006.01); H01M 10/052(2010.01); H01M 10/0525(2010.01); H01M 4/04(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 황화물계 입자(sulfide particles), 고체 전해질(solid electrolyte), 전고체 전지(all solid electrolyte battery), 종횡비(aspect ratio)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022-162085 A1 (SOLVAY SA et al.) 04 August 2022 (2022-08-04)<br>See pages 9 and 17; example 2; and claims 4, 12 and 19. | 1-13 |
| A | US 2023-0024667 A1 (GM GLOBAL TECHNOLOGY OPERATIONS LLC) 26 January 2023 (2023-01-26)<br>See entire document. | 1-13 |
| A | KR 10-2020-0093682 A (MITSUI MINING & SMELTING CO., LTD.) 05 August 2020 (2020-08-05)<br>See entire document. | 1-13 |
| A | KR 10-2018-0057135 A (KOREA ELECTROTECHNOLOGY RESEARCH INSTITUTE) 30 May 2018 (2018-05-30)<br>See entire document. | 1-13 |
| A | KR 10-2018-0076334 A (TOYOTA JIDOSHA KABUSHIKI KAISHA) 05 July 2018 (2018-07-05)<br>See entire document. | 1-13 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 June 2024** | **10 June 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/095459**

| Patent document cited in search report | | | Publication date (day/month/year) | Patent family member(s) | | | Publication date (day/month/year) |
|---|---|---|---|---|---|---|---|
| WO | 2022-162085 | A1 | 04 August 2022 | CN | 117015884 | A | 07 November 2023 |
| | | | | EP | 4285429 | A1 | 06 December 2023 |
| | | | | KR | 10-2023-0162588 | A | 28 November 2023 |
| US | 2023-0024667 | A1 | 26 January 2023 | CN | 115621537 | A | 17 January 2023 |
| KR | 10-2020-0093682 | A | 05 August 2020 | CN | 111448702 | A | 24 July 2020 |
| | | | | CN | 113428880 | A | 24 September 2021 |
| | | | | EP | 3754774 | A1 | 23 December 2020 |
| | | | | EP | 3754774 | A4 | 16 June 2021 |
| | | | | JP | 6704098 | B1 | 03 June 2020 |
| | | | | KR | 10-2237847 | B1 | 07 April 2021 |
| | | | | US | 10938064 | B2 | 02 March 2021 |
| | | | | US | 2021-0020984 | A1 | 21 January 2021 |
| | | | | WO | 2020-050269 | A1 | 12 March 2020 |
| KR | 10-2018-0057135 | A | 30 May 2018 | KR | 10-2193945 | B1 | 22 December 2020 |
| KR | 10-2018-0076334 | A | 05 July 2018 | CN | 108242561 | A | 03 July 2018 |
| | | | | CN | 108242561 | B | 11 December 2020 |
| | | | | EP | 3342751 | A1 | 04 July 2018 |
| | | | | EP | 3342751 | B1 | 06 March 2019 |
| | | | | JP | 2018-106945 | A | 05 July 2018 |
| | | | | JP | 6558357 | B2 | 14 August 2019 |
| | | | | KR | 10-2031531 | B1 | 14 October 2019 |
| | | | | US | 10784012 | B2 | 22 September 2020 |
| | | | | US | 2018-0183096 | A1 | 28 June 2018 |

Form PCT/ISA/210 (patent family annex) (July 2022)